# EUROPÄISCHE PATENTSCHRIFT

(11) **EP 1 913 286 B1**
(45) Veröffentlichungstag und Bekanntmachung des Hinweises auf die Patenterteilung: **15.09.2010**
(21) Anmeldenummer: 06762505.3
(22) Anmeldetag: 08.07.2006
(51) Int. Cl.: F16H 7/14, F02B 67/06

(54) **RIEMENTRIEB**
BELT DRIVE
ENTRAINEMENT PAR COURROIE

(30) Priorität: 29.07.2005 DE 102005035572
(43) Veröffentlichungstag der Anmeldung: 23.04.2008
(73) Patentinhaber: Schaeffler Technologies GmbH & Co. KG, 91074 Herzogenaurach (DE)
(72) Erfinder: STIEF, Hermann, 91448 Emskirchen (DE)
(86) Internationale Anmeldenummer: PCT/EP2006/006701
(87) Internationale Veröffentlichungsnummer: WO 2007/014624

(56) Entgegenhaltungen:
- WO-A-2005/061927
- DE-A1- 2 819 333
- DE-A1- 10 045 144
- US-A- 4 887 992

## Beschreibung

### Gebiet der Erfindung

Gegenstand der Erfindung ist ein Verfahren zur Montage einer als Elastriemen ausgeführten Zugmittels, entsprechend dem Oberbegriff des Anspruch 1 und wie es aus der DE 2 819 333 A bekannt.

### Hintergrund der Erfindung

Riementriebe, die auch als Zugmitteltriebe zu bezeichnen sind, erfordern im Betriebszustand ein vorgespanntes Zugmittel, um einen schlupfarmen und damit verschleißfreien Antrieb zu realisieren.

Vielfältige Riementriebe umfassen eine separate Spannvorrichtung, die ein Nachspannen des Zugmittels, des Riemens, selbsttätig über die die Lebensdauer des Zugmittel vornehmen. Diese überwiegend aufwendig gestalten Vorrichtungen verursachen hohe Herstellkosten. Weiterhin vergrößert sich dadurch der für den Riementrieb erforderliche Einbauraum.

Außerdem sind Riementriebe ohne separate Spannvorrichtungen bekannt, die als Zugmittel einen sogenannten Elastriemen aufweisen. Bei diesen Riementrieben kann das Problem auftreten, dass der Elastriemen bei der Montage relativ stark gedehnt werden muss, um ein Auflegen des Riemens auf die Riemenscheibe des Riementriebes zu gewährleisten. Dabei kann eine Überdehnung des Elastriemens auftreten, d.h. eine Vorschädigung des Elastriemens, wodurch sich keine ausreichende Vorspannung einstellt. Dies führt zu einem erhöhten Schlupf und Verschleiß. Damit kann es zu einem vorzeitigen Ausfall des Zugmittels, d.h. des Elastriemens und des Riementriebs kommen. Weiterhin ist eine solche, spezielle Werkzeuge erfordernde Montageprozedur des Elastriemens umständlich, zeitaufwendig erfordert spezielle Werkzeuge und verursacht insgesamt hohe Kosten.

Die Brennkraftmaschine für den Pkw Volkswagen, Typ "Käfer", umfasst einen Riementrieb zwischen einer der Kurbelwelle zugeordneten Riemenscheibe und der Riemenscheibe des Generators. Zur Montage des als Keilriemen ausgeführten Zugmittels ist vorgesehen, die eine Hälfte der geteilten, der Lichtmaschine zugeordneten Riemenscheibe abzunehmen, sodass der Riemen spannungsfrei montierbar ist. Die Vorspannung des Riemens kann durch Distanzscheiben zwischen den Riemenscheibenhälften beeinflusst werden, die vor der Montage der zweiten Riemenscheibenhälfte einsetzbar sind.

Aus der DE 38 21 369 C2 ist eine Vorrichtung zur begrenzten Dehnung bzw. für ein Vorrecken des Zugmittels bekannt. Hierbei wird der zu montierende Riemen zunächst in einer gesonderten Spannvorrichtung aufgenommen und dynamisch belastet, wodurch sich eine Vorreckung einstellt. Anschließend wird der Riemen im betriebswarmen Zustand in den vorbestimmten Bauraum, den Riementrieb des Fahrzeugs montiert. Nachteilig ist der insgesamt hohe Aufwand der Montage sowie die Mehrkosten aufgrund der separaten Reckvorrichtung.

### Aufgabe der Erfindung

Es ist Aufgabe der vorliegenden Erfindung, eine Verfahren zu schaffen, das eine einfache Montage des Elastriemens ohne Spezialwerkzeuge ermöglicht, verbunden mit einer erhöhen Lebensdauer.

### Zusammenfassung der Erfindung

Gegenstand der Erfindung ist ein Verfahren zur Montage eines als Elastriemen ausgeführten Zugmittels. Zur Lösung der gestellten Aufgabe ist ein Verfahren mit den Merkmalen des Anspruchs 1 vorgesehen.

Diese erfindungsgemäße Maßnahme ist vorteilhaft ohne eine nachteilige, unzulässige Dehnung oder Vorreckung des Elastriemens möglich, wodurch eine erhöhte Lebensdauer des Elastriemens und des damit verbundenen Zugriementriebs erzielbar ist. Diese Montage des Elastriemens ist vorteilhaft kostengünstig darstellbar. Im Vergleich zu bisher bekannten Lösungen mit aufwendigen Spannsystemen, Reckeinrichtungen oder aufwendigen Montageprozeduren, ermöglicht die Erfindung eine schnell und einfach durchführbare Montage des als Elastriemen ausgebildeten Zugmittels. Die Erfindung gewährleistet weiterhin eine absolut schonende Behandlung des Elastriemens, was sich vorteilhaft auf die Lebensdauer auswirkt und damit ein Kostenvorteil realisierbar ist.

Weitere vorteilhafte Ausgestaltungen der Erfindung sind Gegenstand der abhängigen Ansprüche, die nachfolgend erläutert werden.

Die erfindungsgemäße, ortsveränderlich befestigte Riemenscheibe ist vorzugsweise über zwei Verschraubungen lösbar an einem Antriebs- oder Abtriebsrad befestigt. Diese Anordnung ermöglicht nach Entfernen einer Verschraubung und der begrenzten Lösung der weiteren Verschraubung, dass die Riemenscheibe um die begrenzte Verschraubung exzentrisch verdrehbar ist. In dieser Lage der Riemenscheibe wird das Auflegen des Riemens auf alle Riemenscheiben des Riementriebs vereinfacht. Nach aufgelegtem Riemen wird die exzentrisch verlagerte Riemenscheibe in die Betriebsposition verdreht, wobei gleichzeitig der Elastriemen vorgespannt wird, bevor anschließend mittels der weiteren Verschraubung die Riemenscheibe für den Betriebszustand befestigt wird.

Zur Erzielung einer möglichst großen Verstellung der ortsveränderlich positionierten Riemenscheibe bietet sich an, die begrenzt gelöste Verschraubung so auszurichten, dass diese mit der vom Elastriemen bestimmten Kraftrichtung der Riemenscheibe übereinstimmt. Damit stellt sich einerseits ein max. Verstellung der Riemenscheibe ein und anderseits wird bei aufgelegtem Elastriemen eine selbstätige Verdrehung der Riemenscheibe in die vom Elastriemen vorgegebenen Kraftrichtung verhindert.

Dieses Verfahren kann unabhängig von der Anzahl der Verschraubungen gewählt werden, wobei generell bis auf eine Verschraubung alle übrigen Verschraubungen gelöst werden, um ein Verschwenken der Riemenscheibe gegenüber der Befestigungs- oder Anflanschfläche zu ermöglichen.

Die Erfindung schließt weiterhin ein Stellmittel ein, mit dem die ortsveränderliche Riemenscheibe nach aufgelegtem Zugmittel in die Betriebsposition verstellbar ist. Das Stellmittel ist dabei so ausgeführt, dass die Riemenscheibe mit einem geringen Kraftaufwand händisch um die begrenzt gelöste Verschraubung nach dem Auflegen des Elastriemens in die Betriebsstellung schwenkbar ist.

Als Stellmittel bietet sich insbesondere ein externes Werkzeug an, dass bevorzugt in eine Werkzeugaufnahme der Riemenscheibe formschlüssig eingreift, um die Riemenscheibe mit einem geringen Kraftaufwand zu verstellen. Als Werkzeug ist vorzugsweise ein abgewinkelter Hebelarm vorgesehen, der endseitig ein Mehrkantprofil aufweist, das formschlüssig in eine beispielsweise als Sechskant ausgebildete Ausnehmung der Riemenscheibe eingreift.

Weiterhin schließt die Erfindung eine ortsveränderliche angeordnete Riemenscheibe ein, die mit einer Führungskulisse zusammenwirkt. Die Führungskulisse ist dabei im Radius zu der begrenzt gelösten Verschraubung an der Riemenscheibe oder dem zugehörigen Antriebsrad bzw. Abtriebsrad angeordnet. Im Betriebszustand greift ein axial vorstehender Ansatz oder Nocken des mit der Führungskulisse zusammenwirkenden zugehörigen weiteren Bauteils formschlüssig in das Führungssegment.

Zur Erzielung einer definierten Montageposition der ortsveränderlichen Riemenscheibe ist die Führungskulisse bevorzugt mit zumindest einem Endenschlag versehen. Die Führungskulisse in Verbindung mit dem Endanschlag ermöglicht eine automatisierte Montage des Riemens und einer anschließenden Verdrehung der Riemenscheibe gegenüber dem zugehörigen Abtriebs- oder Antriebsrad.

Zur Vermeidung einer Fehlmontage ist gemäß der Erfindung vorgesehen, dass die als Drehpunkt der ortsveränderlichen Riemenscheibe bestimmte begrenzt lösbare Verschraubung eine Kennzeichnung aufweist. Diese Maßnahme soll dazu dienen, dass keine Verwechselung der Verschraubung erfolgt, die für die Montage des Elastriemens einen exzentrischen Drehpunkt der Riemenscheibe bildet.

Als weitere Ausgestaltung der Erfindung ist zur vereinfachten Montage des als Elastriemens vorgesehenen Zugmittels, der Riementrieb mit zwei ortsveränderlichen Riemenscheiben ausgestattet. Diese Maßnahme eignet sich bevorzugt für einen Riementrieb mit einer Vielzahl von Riemenscheiben, wobei einzelne Riemenscheiben nur schwer zugänglich sind. Durch zwei ortsveränderlich gestaltete Riemenscheiben des Riementriebs wird das Auflegen, die Montage des Elastriemens deutlich vereinfacht.

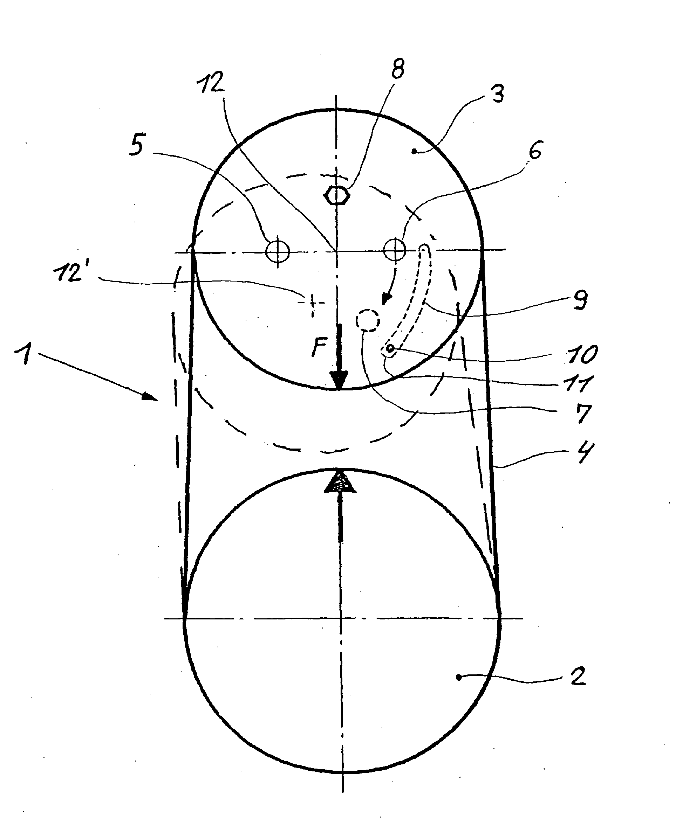

### Kurze Beschreibung der Zeichnung

In der einzigen Figur ist schematisch ein erfindungsgemäßer Riementrieb dargestellt, bei dem eine Riemenscheibe in einer Montage- und einer Betriebsposition abgebildet ist.

### Detaillierte Beschreibung der Zeichnungen

Der Riementrieb 1 schließt zwei Riemenscheiben 2,3 ein, die durch ein Zugmittel, einen Elastriemen 4 verbunden sind. Der Antrieb erfolgt dabei über die als Abtriebsrad ausgelegte Riemenscheibe 2, die bevorzugt mit der Kurbelwelle, einer nicht dargestellten Brennkraftmaschine in Verbindung steht. Die weitere Riemenscheibe 3 bildet das Antriebsrad, das beispielsweise mit der Wasserpumpe der Brennkraftmaschine oder einem anderen Aggregat verbunden ist. Das als Elastriemen 4 ausgebildete Zugmittel stellt ein dauerelastisches, vorgespanntes Zugmittel dar, sodass für den Riementrieb1 kein separates Spannsystem erforderlich ist, um einen weitestgehend schlupffreien und damit verschleißarmen Riementrieb 1 zu gewährleisten.

Zur einfachen Montage des Elastriemens 4 ist gemäß der Erfindung eine ortsveränderliche, verschiebbare Riemenscheibe 3 vorgesehen. Diese Maßnahme wird durch eine exzentrische Verlagerung der Riemenscheibe 3 realisiert, wodurch sich eine Montageposition ergibt, in der ein vereinfachtes Auflegen des Elastriemens 4 möglich ist. Gemäß dem Ausführungsbeispiel ist die Riemenscheibe 3 mit den Verschraubungen 5, 6 an dem zugehörigen Aggregat lösbar befestigt. Zur Montage wird die Verschraubung 6 entfernt, sodass die Riemenscheibe 3 um die verbleibende, begrenzt gelöste Verschraubung 5 exzentrisch drehbar ist.

Für die Montageposition der Riemenscheibe 3 wird diese in Pfeilrichtung, im Uhrzeigersinn verdreht, wobei die Verschraubung 5 dabei eine Drehachse für die Riemenscheibe 3 bildet. Die Position der Verschraubung 6, d.h. deren zugehörige Aufnahmebohrung verlagert sich dabei in die strichpunktiert gekennzeichnete Endlage 7. Zur Verdeutlichung der Montageposition ist weiterhin die Riemenscheibe 3 sowie der Elastriemen 4 strichpunktiert dargestellt, entsprechend der Endlage 7. In der Montageposition stellt sich ein verringerter Achsabstand zwischen den Riemenscheiben 2, 3 ein, der ein einfaches Auflegen des Elastriemens 4 ermöglicht. Gleichzeitig verlagert sich der Mittelpunkt 12 der Riemenscheibe 3 in die ebenfalls strichpunktierte Position 12'.

Als Montagehilfe weist die Riemenscheibe 3 eine als ein Mehrkantprofil ausgebildete Werkzeugaufnahme 8 auf, die bevorzugt als ein Sechskant geformt ist. Die Werkzeugaufnahme 8 ist für ein separates Werkzeug bestimmt, dass endseitig ein mit dem Mehrkantprofil der Werkzeugaufnahme 8 korrespondierendes Profil aufweist. Dazu eignet sich beispielsweise ein Innensechskantschlüssel, mit dem die Riemenscheibe 3 nach aufgelegtem Elastriemen 4 vereinfacht von der strichpunktiert dargestellten Montageposition in die Betriebsposition schwenkbar ist. Weiterhin ist zwischen der Riemenscheibe 3 und dem zugehörigen Aggregat eine Führungskulisse 9 vorgesehen. Die Führungskulisse 9 umfasst im Bereich der Abstützfläche der Riemenscheibe 3 an dem zugehörigen Aggregat eine gekrümmte, in einem Radius zu der Verschraubung 5 verlaufende Ausnehmung, in die ein mit der Riemenscheibe 2 verbundener vorstehender Stift 10 formschlüssig eingreift. Ein Endanschlag 11 der Führungskulisse 9 definiert dabei die Endlage, die Montageposition der Riemenscheibe 2.

Für die Elastriemenmontage bietet es sich vorteilhaft an, zunächst die Riemenscheibe 3 so auszurichten, dass die gelöste Verschraubung 5 oder 6 mit einer Richtung der Kraft "F" übereinstimmt, die im Einbauzustand von dem Elastriemen 4 auf die Riemenscheine 3 ausgeübt wird. Durch diese Maßnahme wird eine selbsttätige Verdrehung der Riemenscheibe 3 während der Montage ververhindert.

### Bezugszahlenliste

- 1: Riementrieb
- 2: Riemenscheibe
- 3: Riemenscheibe
- 4: Elastriemen
- 5: Verschraubung
- 6: Verschraubung
- 7: Endlage
- 8: Werkzeugaufnahme
- 9: Führungskulisse
- 10: Stift
- 11: Endanschlag
- 12: Mittelpunkt

## Patentansprüche

1. Verfahren zur Montage eines als Elastriemen (4) ausgeführten Zugmittels eines ein Abtriebsrad oder zumindest ein Antriebsrad umfassenden Riementriebs einer Brennkraftmaschine, wobei der Elastriemen (4) jeweils dem Abtrieb- und dem Antriebsrad zugeordnete Riemenscheiben (2, 3) verbindet und zumindest eine Riemenscheibe (2, 3) lösbare Befestigungsmittel aufweist, **dadurch gekennzeichnet daß** das Montageverfahren die folgenden Schritte umfasst,
- bis auf eine werden alle weiteren als Verschraubung (5, 6) ausgeführten Befestigungsmittel der Riemenscheibe (2) entfernt;
- begrenztes Lösen der verbleibenden Verschraubung (5);
- exzentrisches Verschwenken der Riemenscheibe (2) um die verbleibende Verschraubung (5), in eine einen Achsabstand zwischen den Riemenscheiben (2,3) verringernde Position;
- Auflegen des Elastriemen (4) auf die verschwenkte Riemenscheibe (2) sowie alle weiteren Riemenscheiben (3) der Riementriebs (1).

2. Verfahren zur Montage des als Elastriemen (4) ausgeführten Zugmittels nach Anspruch 1 **dadurch gekennzeichnet, dass** während der Elastriemenmontage die Riemenscheibe (3) so eingestellt ist, damit die begrenzt gelöste verbleibende Verschraubung (5) mit einer von dem Elastriemen (4) vorgegebenen Kraftrichtung übereinstimmt.

3. Verfahren zur Montage des als Elastriemen (4) ausgeführten Zugmittels nach Anspruch 1 **dadurch gekennzeichnet, dass** zwei Riemenscheiben (2,3) während der Montage des Elastriemens (4) begrenzt ortsveränderlich gelagert bzw. positionierbar sind.

4. Einrichtung zur Durchführung des Verfahrens nach Anspruch 1, **dadurch gekennzeichnet, dass** die schwenkbare Riemenscheibe (3) über ein externes Stellmittel verstellbar ist.

5. Einrichtung nach Anspruch 4, **dadurch gekennzeichnet, dass** die Riemenscheibe (3) eine für ein externes Werkzeug bestimmte Werkzeugaufnahme (8) einschließt.

6. Einrichtung nach einem der vorhergehenden Ansprüche 1 bis 5, **dadurch gekennzeichnet, dass** die Riemenscheibe (3) mit einem ein Sechskantprofil aufweisenden Werkzeug verstellt werden kann.

7. Einrichtung nach einem der vorhergehenden Ansprüche 1 bis 6, **dadurch gekennzeichnet, dass** die ortsveränderliche Riemenscheibe (3) mit einer Führungskulisse (9) zusammenwirkt.

8. Einrichtung nach Anspruch 7, wobei die Führungskulisse (9) zwischen der Riemenscheibe (3) und dem zugehörigen Abtriebsrad oder Antriebsrad vorgesehen ist.

9. Einrichtung nach Anspruch 7, wobei die Führungskulisse (9) zur Aufnahme eines Stiftes (10) bestimmt ist, der an der Riemenscheibe (3) oder dem Abtriebsrad bzw. dem Antriebsrad angeordnet ist und formschlüssig in die Führungskulisse (9) eingreift.

10. Einrichtung nach Anspruch 7, wobei die Führungskulisse (9) zumindest einen Endanschlag (11) bildet.

11. Einrichtung nach einem der vorhergehenden Ansprüche 1 bis 10, **dadurch gekennzeichnet, dass** die als Drehpunkt der Riemenscheibe (3) für die Montage des Elastriemens (4) bestimmte Verschraubung (5) eine Kennzeichnung aufweist.

## Claims

1. Method for mounting a traction means, designed as an elastomeric belt (4), of a belt drive, comprising a driven wheel or at least one driving wheel, of an internal combustion engine, the elastomeric belt (4) connecting belt pulleys (2, 3) which are in each case assigned to the driven wheel and to the driving wheel, and having fastening means capable of releasing at least one belt pulley (2, 3), **characterized in that** the mounting method comprises the following steps
- with the exception of one, all further fastening means of the belt pulley (2) which are designed as screw connection (5, 6) are removed;
- limited loosening of the remaining screw connection (5);
- eccentric pivoting of the belt pulley (2) about the remaining screw connection (5) into a position in which a centre distance between the belt pulleys (2, 3) is reduced;
- laying of the elastomeric belt (4) onto the pivoted belt pulley (2) and all further belt pulleys (3) of the belt drive (1).

2. Method for mounting the traction means, designed as an elastomeric belt (4), according to Claim 1, **characterized in that**, during the mounting of the elastomeric belt, the belt pulley (3) is set so that the remaining screw connection (5) loosened to a limited extent coincides with a force direction predetermined by the elastomeric belt (4).

3. Method for mounting the traction means, designed as an elastomeric belt (4), according to Claim 1, **characterized in that**, during the mounting of the elastomeric belt (4), two belt pulleys (2, 3) are mounted or positionable movably to a limited extent.

4. Device for carrying out the method according to Claim 1, **characterized in that** the pivotable belt pulley (3) is adjustable via an external actuating means.

5. Device according to Claim 4, **characterized in that** the belt pulley (3) includes a toolholding fixture (8) intended for an external tool.

6. Device according to one of the preceding Claims 1 to 5, **characterized in that** the belt pulley (3) can be adjusted by means of a tool having a hexagonal profile.

7. Device according to one of the preceding Claims 1 to 6, **characterized in that** the movable belt pulley (3) cooperates with a guide slot (9).

8. Device according to Claim 7, the guide slot (9) being provided between the belt pulley (3) and the associated driven wheel or driving wheel.

9. Device according to Claim 7, the guide slot (9) being intended for receiving a pin (10) which is arranged on the belt pulley (3) or on the driven wheel or driving wheel and which engages positively into the guide slot (9).

10. Device according to Claim 7, the guide slot (9) forming at least one limit stop (11).

11. Device according to one of the preceding Claims 1 to 10, **characterized in that** the screw connection (5) intended as a centre of rotation of the belt pulley (3) for mounting the elastomeric belt (4) has an identification marking.

## Revendications

1. Procédé de montage d'un moyen de traction réalisé sous forme de courroie élastique (4), d'un entraînement par courroie d'un moteur à combustion interne comprenant une roue de sortie ou au moins une roue d'entraînement, la courroie élastique (4) reliant à chaque fois des poulies à courroie (2, 3) associées à la roue de sortie et à la roue d'entraînement, et au moins une poulie à courroie (2, 3) présentant des moyens de fixation détachables, **caractérisé en ce que** le procédé de montage comprend les étapes suivantes .
- à l'exception d'un seul, tous les autres moyens de fixation de la poulie à courroie (2) réalisés sous forme de vissage (5, 6) sont enlevés ;
- desserrage limité du vissage restant (5) ;
- pivotement excentrique de la poulie à courroie (2) autour du vissage restant (5), dans une position réduisant une distance axiale entre les poulies à courroie (2, 3) ;
- pose de la courroie élastique (4) sur la poulie à courroie pivotée (2) ainsi que toutes les autres poulies à courroie (3) de l'entraînement à courroie (1).

2. Procédé de montage du moyen de traction réalisé sous forme de courroie élastique (4) selon la revendication 1, **caractérisé en ce que** pendant le montage de la courroie élastique, la poulie à courroie (3) est ajustée de telle sorte que le vissage restant (5) desserré de manière limitée coïncide avec une direction de force prédéfinie par la courroie élastique (4).

3. Procédé de montage du moyen de traction réalisé sous forme de courroie élastique (4) selon la revendication 1, **caractérisé en ce que** deux poulies à courroie (2, 3) sont montées ou peuvent être positionnées pendant le montage de la courroie élastique (4) avec une mobilité limitée.

4. Dispositif pour mettre en oeuvre le procédé selon la revendication 1, **caractérisé en ce que** la poulie à courroie pivotante (3) peut être réglée par le biais d'un moyen de commande externe.

5. Dispositif selon la revendication 4, **caractérisé en ce que** la poulie à courroie (3) inclut un porte-outil (8) prévu pour un outil externe.

6. Dispositif selon l'une quelconque des revendications précédentes 1 à 5, **caractérisé en ce que** la poulie à courroie (3) peut être réglée avec un outil présentant un profil hexagonal.

7. Dispositif selon l'une quelconque des revendications précédentes 1 à 6, **caractérisé en ce que** la poulie à courroie mobile (3) coopère avec une coulisse de guidage (9).

8. Dispositif selon la revendication 7, dans lequel la coulisse de guidage (9) est prévue entre la poulie à courroie (3) et la roue de sortie ou la roue d'entraînement associée.

9. Dispositif selon la revendication 7, dans lequel la coulisse de guidage (9) est prévue pour recevoir une goupille (10), qui est disposée sur la poulie à courroie (3) ou sur la roue de sortie ou la roue d'entraînement, et qui vient en prise par engagement positif dans la coulisse de guidage (9).

10. Dispositif selon la revendication 7, dans lequel la coulisse de guidage (9) forme au moins une butée de fin de course (11).

11. Dispositif selon l'une quelconque des revendications précédentes 1 à 10, **caractérisé en ce que** le vissage (5) prévu en tant que centre de la poulie à courroie (3) pour le montage de la courroie élastique (4) présente un marquage.
